# DEMANDE DE BREVET EUROPEEN

(11) **EP 0 546 903 A1**
(43) Date de publication de la demande: **16.06.1993**
(21) Numéro de dépôt: 92403290.7
(22) Date de dépôt: 04.12.1992
(51) Int. Cl.: B32B 31/06, B32B 27/18, B65D 65/40

(54) **Procédé de fabrication d'un film multicouches pour conditionnement et film multicouches obtenu**

(30) Priorité: 11.12.1991 FR 9115390
(71) Demandeur: C.M.B. FLEXIBLE, F-16300 Barbezieux St Hilaire (FR)
(72) Inventeur: Lanquetot, Hervé, F-78000 Versailles (FR)
(74) Mandataire: Jacobson, Claude

(57) **Abrégé**

L'invention concerne un procédé de fabrication d'un film multicouches destiné au conditionnement de produits, notamment alimentaires, et comportant une feuille interne (4) en matière plastique perméable aux gaz, un film (20) contigu comportant au moins une pellicule formant barrière à l'air, le film et la feuille étant fixés l'un à l'autre à l'aide d'une composition formant colle et contenant un absorbant d'oxygène et un activateur de cet absorbant d'oxygène. Le procédé selon l'invention comporte les étapes consistant à :
A - enduire une face de la feuille à l'aide d'un mélange (17) d'adhésif et d'absorbant d'oxygène,
B - enduire une face du film à l'aide d'un mélange (26) d'adhésif et d'activateur de l'absorbant d'oxygène, et
C - appliquer ensuite l'une contre l'autre les faces enduites.

## Description

La présente invention concerne un procédé de fabrication d'un film multicouches en matière plastique, destiné au conditionnement de produits, notamment de produits alimentaires, tel que décrit dans le préambule de la revendication 1.

Un tel film est décrit dans la demande EP-A- 0 474 525 et comporte une couche interne constituée d'une feuille de matière plastique perméable à l'air, une couche externe constituée d'au moins une feuille de matière plastique formant barrière à l'air, la couche interne et la couche externe étant fixées l'une sur l'autre à l'aide d'une couche d'adhésif contenant un absorbant d'oxygène sous forme de particules de fer et un activateur de l'oxydation du fer.

Il s'avère que la réalisation industrielle de ce film à l'aide de machines classiques destinées à réaliser des films ayant deux couches reliées par un adhésif présente quelques difficultés.

On a constaté par exemple que la réaction d'oxydation du fer par absorption d'oxygène se déclenche lors de la fabrication du mélange adhésif-fer-activateur, ce qui réduit la capacité d'absorption ultérieure du fer.

Pour remédier à cet inconvénient, il a été envisagé d'augmenter le pourcentage de fer normalement prévu dans l'adhésif. Cependant, une telle augmentation accroît la viscosité du mélange, ce qui rend difficile sinon impossible l'étalement correct du mélange à l'aide des machines.

Pour remédier à ces inconvénients, la présente invention a pour but de fournir un procédé amélioré de fabrication industrielle d'un tel film multicouches pour conditionnements, permettant d'absorber au moins partiellement l'oxygène contenu dans le conditionnement, tout en évitant au maximum un début d'oxydation prématuré du fer.

A cet effet, la présente invention a pour objet un procédé de fabrication d'un film multicouches destiné au conditionnement de produits, notamment de produits alimentaires, et comportant un premier constituant formé d'une feuille interne en matière plastique perméable aux gaz, un second constituant formé d'un film contigu comportant au moins une pellicule formant barrière à l'air, le film et la feuille étant fixés l'un à l'autre à l'aide d'une composition formant colle et contenant un absorbant d'oxygène et un activateur de cet absorbant d'oxygène, caractérisé par la partie caractérisante de la revendication 1.

D'autres caractéristiques sont décrites dans les sous-revendications 2 à 9.

L'invention concerne également un film multicouches obtenu par la mise en oeuvre du procédé selon l'invention. Des caractéristiques de ce film sont décrites dans les revendications 10 à 12.

L'invention sera mieux comprise à la lecture de la description détaillée qui va suivre, faite à titre d'exemple et en référence aux dessins annexés sur lesquels :
- la figure 1 est une vue schématique d'un dispositif destiné à la mise en oeuvre en continu du procédé,
- la figure 2 est une vue partielle en perspective d'un film obtenu par la mise en oeuvre du procédé selon l'invention.

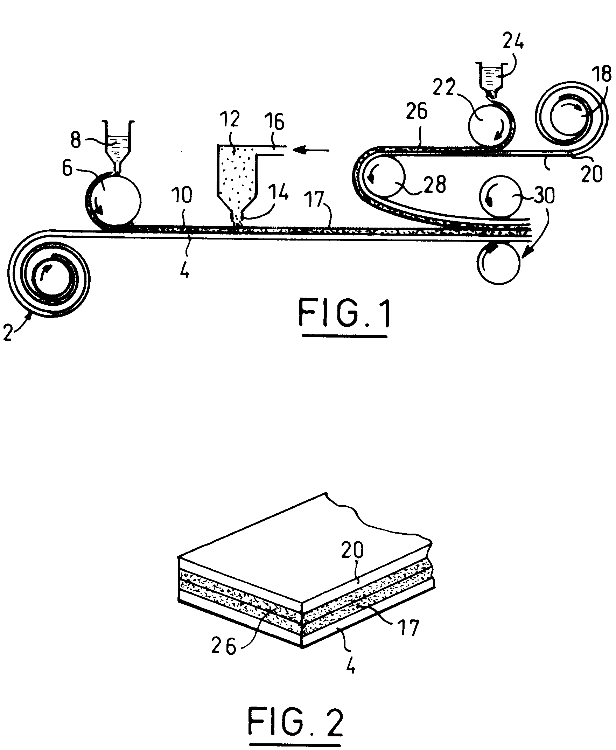

Le dispositif représenté sur la figure 1 sous forme schématique comporte un dérouleur 2 sur lequel est agencée une feuille 4 de matière plastique perméable aux gaz.

La feuille 4 est déroulée selon un trajet horizontal à l'aide de moyens de guidage connus et non représentés.

Au-dessus de la feuille 4, dans sa partie horizontale, est agencé un cylindre 6 dont la périphérie est écartée de la feuille 4.

Au-dessus du cylindre 6 est agencé un dispositif distributeur de résine sans solvant, de préférence bi-composant, représenté schématiquement par un réservoir 8.

Le dérouleur 2 et le cylindre 6 tournent dans des sens opposés de manière telle que l'adhésif est étalé à la surface du cylindre 6 puis vient constituer une couche 10 d'adhésif sur la face supérieure de la feuille 4.

On obtient ainsi un ensemble constitué de la feuille 4 enduite d'adhésif.

En aval du cylindre 6, dans la direction de déroulement de la feuille 4, est agencé un réservoir 12 contenant un absorbant d'oxygène constitué par du fer réduit très pur sous forme de particules de 5 à 30 microns.

Le réservoir 12 comporte une ouverture 14 située au-dessus de la couche 10 d'adhésif et à proximité de celle-ci, et s'étendant sur toute la largeur de la couche.

Le réservoir 12 est de préférence sous atmosphère inerte à l'aide d'azote introduit par un orifice 16. Le réservoir 12 comporte à proximité de l'ouverture 14 un dispositif connu en soi de saupoudrage ou de pulvérisation des particules de fer sur la couche d'adhésif 10 pour constituer une couche 17 d'adhésif et d'absorbant d'oxygène.

En aval de la zone de pulvérisation de fer, et au-dessus de l'ensemble composé de la feuille 4 enduite de résine et de particules de fer, est agencé un poste d'alimentation d'un film de matière plastique formant barrière à l'air enduit d'adhésif et d'activateur de l'absorbant d'oxygène.

Ce poste d'alimentation comporte un dévidoir 18 à partir duquel est déroulé un film 20 de matière plastique comportant au moins une pellicule de matière plastique formant barrière à l'air, un cylindre 22 situé en vis-à-vis de l'une des faces du film 20 et légèrement éloigné de cette dernière.

Le cylindre 22 reçoit d'un réservoir 24 une composition constituée d'un mélange de résine et de solvant auquel on a ajouté un activateur de l'oxydation du fer, par exemple de la chaux ou du carbonate de calcium.

Le cylindre 22 est agencé de manière telle que, lors du déroulement du film 20, une couche 26 de résine avec solvant et d'activateur de l'oxydation du fer soit appliquée sur l'une des faces du film 20.

De manière connue, la couche 26 est ensuite chauffée pour faire évaporer plus rapidement le solvant.

Le dispositif comporte un rouleau de renvoi 28 destiné à amener la couche 26 en vis-à-vis de la couche 17 d'adhésif et d'absorbant d'oxygène.

Un ensemble de cylindres presseurs 30 permet d'appliquer l'une contre l'autre les faces enduites de la feuille 4 et du film 20 qui sont fixées l'une à l'autre par la couche 26.

Le fait que la couche d'adhésif 10 soit constituée d'une résine sans solvant permet d'obtenir une couche 17 d'adhésif et de fer relativement molle avant l'application pour fixation de la couche 26 sur la couche 17.

On obtient ainsi un film tel que représenté sur la figure 2 comportant une feuille 4 de matière plastique perméable aux gaz, une couche 17 d'adhésif contenant du fer, une couche 26 d'adhésif contenant un activateur de l'oxydation du fer, et un film 20 ayant au moins une couche de matière plastique formant barrière à l'air.

L'homme du métier comprendra que les couches 17 et 26 peuvent être inversées l'une par rapport à l'autre.

Par rapport à un film multicouches tel que décrit dans la demande EP-A-0 474 525 précitée, un tel film présente l'avantage de séparer l'activateur de l'oxydation du fer des particules de fer, ce qui évite une oxydation importante du fer avant transformation du film en emballage.

De plus, le fait de pulvériser les particules de fer dans la couche d'adhésif 10 présente l'avantage de permettre d'augmenter la teneur en fer de la couche 17 sans augmenter la viscosité de l'adhésif 10, ce qui permet d'obtenir un étalement correct de la couche 17 sur la feuille 4.

Il est à noter qu'un tel procédé peut être réalisé en discontinu.

Dans ce cas, à un premier poste on enduit la feuille 4 de la couche 17 d'adhésif contenant du fer, et on réalise l'enduction du film 20 par la couche 26 sur un autre poste indépendant du premier poste, l'application des faces enduites de la feuille 4 et du film 20 étant alors réalisée ultérieurement, ce qui nécessite un stockage des ensembles obtenus aux deux postes d'enduction.

Dans ce cas, le stockage du film 20 enduit de la couche 26 d'adhésif et d'activateur est avantageusement réalisé par enroulement de l'ensemble obtenu de manière telle que le film 20 constitue la face extérieure de l'enroulement pour limiter l'introduction d'humidité dans la couche 26, et éviter ainsi de dégrader prématurément les qualités de l'activateur.

Le stockage de la feuille 4 enduite de la couche 17 d'adhésif et d'absorbant est réalisé en recouvrant la couche 17 d'une macule de protection puis en enroulant l'ensemble de manière telle que la macule constitue la couche externe de l'enroulement afin d'éviter la pénétration d'oxygène dans la couche 17, ce qui diminuerait les capacités de l'absorbant.

L'application l'une contre l'autre des faces enduites est réalisée par l'interposition d'une couche de colle.

La colle sera de préférence sans solvant et mono-composant.

Le procédé suivant l'invention permet donc d'obtenir un film destiné au conditionnement de produits alimentaires, et éliminant les inconvénients rencontrés antérieurement dans la fabrication d'un tel film.

## Revendications

**1.** Procédé de fabrication d'un film multicouches destiné au conditionnement de produits, notamment de produits alimentaires, et comportant un premier constituant formé d'une feuille interne (4) en matière plastique perméable aux gaz, un second constituant formé d'un film (20) contigu comportant au moins une pellicule formant barrière à l'air, le film et la feuille étant fixés l'un à l'autre à l'aide d'une composition formant colle et contenant un absorbant d'oxygène et un activateur de cet absorbant d'oxygène, caractérisé en ce qu'il comporte les étapes consistant à :
A - enduire une face de l'un des constituants à l'aide d'un mélange (17) d'adhésif et de l'absorbant d'oxygène,
B - enduire une face de l'autre des constituants à l'aide d'un mélange (26) d'adhésif et de l'activateur de l'absorbant d'oxygène, et
C - appliquer ensuite l'une contre l'autre les faces enduites.

**2.-** Procédé selon la revendication 1, caractérisé en ce que l'étape d'enduction à l'aide d'un mélange (17) d'adhésif et de l'absorbant d'oxygène consiste à enduire une face de l'un des constituants à l'aide d'un adhésif (10) puis à pulvériser l'absorbant d'oxygène sur la couche d'adhésif enduite.

**3.-** Procédé selon la revendication 2, caractérisé en ce que la pulvérisation de l'absorbant d'oxygène consiste à saupoudrer l'adhésif d'absorbant contenu dans un réservoir sous atmosphère inerte vis-à-vis de l'absorbant, cette atmosphère inerte étant notamment constituée d'azote.

**4.-** Procédé selon l'une quelconque des revendications 1 à 3, caractérisé en ce que le mélange d'adhésif et d'absorbant d'oxygène comprend une résine sans solvant, notamment du type bi-composant, l'absorbant d'oxygène étant du fer réduit très pur sous forme de particules de 5 à 30 microns.

**5.-** Procédé selon la revendication 4, caractérisé en ce que l'activateur des particules de fer est un produit ayant une grande affinité pour l'eau, notamment de la chaux ou du carbonate de calcium.

**6.-** Procédé selon l'une quelconque des revendications 1 à 5, caractérisé en ce que l'étape d'enduction à l'aide d'un mélange (26) d'adhésif et d'activateur de l'absorbant d'oxygène consiste à enduire une face dudit autre des constituants à l'aide d'une résine avec solvant mélangée à l'activateur de l'absorbant d'oxygène.

**7.-** Procédé selon l'une quelconque des revendications précédentes, caractérisé en ce qu'il comporte le stockage d'une part de l'un des constituants enduit à l'aide du mélange (17) d'adhésif et d'absorbant de l'oxygène et d'autre part de l'autre des constituants enduit à l'aide du mélange (26) d'adhésif et d'activateur de l'absorbant d'oxygène, l'application des faces enduites l'une contre l'autre étant effectuée ultérieurement, par interposition d'une colle, notamment d'une colle mono-composant sans solvant, entre les faces enduites.

**8.-** Procédé selon la revendication 7 en combinaison avec la revendication 4, caractérisé en ce que le stockage du constituant enduit de résine sans solvant et d'absorbant de l'oxygène consiste à recouvrir la face enduite par une macule puis à enrouler l'ensemble.

**9.-** Procédé selon la revendication 7 ou 8, caractérisé en ce que le stockage du constituant enduit de résine avec solvant et d'activateur de l'absorbant d'oxygène consiste à enrouler l'ensemble.

**10.-** Film multicouches obtenu par la mise en oeuvre du procédé selon l'une quelconque des revendications précédentes, caractérisé en ce qu'il comporte une feuille (4) perméable aux gaz, une première couche contiguë (17) composée d'un mélange d'adhésif et d'absorbant d'oxygène, une seconde couche adjacente (26) à la première couche et composée d'un mélange d'adhésif et d'activateur de l'absorbant d'oxygène, et un film (20) formant barrière à l'air recouvrant la seconde couche.

**11.-** Film multicouches selon la revendication 10, caractérisé en ce que la disposition relative desdites première et seconde couches est inversée.

**12.-** Film multicouches obtenu par la mise en oeuvre du procédé selon l'une des revendications 7 à 9, caractérisé en ce qu'un des constituants comporte une face enduite d'un mélange d'adhésif et d'absorbant d'oxygène, l'autre constituant ayant une face enduite d'un mélange d'adhésif et d'activateur de l'absorbant d'oxygène, et en ce qu'il comporte une colle interposée entre les faces enduites.
